# EUROPÄISCHE PATENTSCHRIFT

(11) **EP 0 938 662 B1**
(45) Veröffentlichungstag und Bekanntmachung des Hinweises auf die Patenterteilung: **22.06.2005**
(21) Anmeldenummer: 97951175.5
(22) Anmeldetag: 12.11.1997
(51) Int. Cl.: G01N 21/88

(54) **VERFAHREN ZUM TESTEN DER ZUVERLÄSSIGKEIT EINES PRÜFGERÄTES, INSBESONDERE EINES LEERFLASCHENINSPEKTORS**
METHOD FOR TESTING THE RELIABILITY OF A TESTING APPARATUS, SPECIALLY AN EMPTY BOTTLE INSPECTING DEVICE
PROCEDE POUR TESTER LA FIABILITE D'UN APPAREIL DE CONTROLE, EN PARTICULIER D'UN SYSTEME DE CONTROLE DE BOUTEILLES VIDES

(30) Priorität: 12.11.1996 DE 19646694
(43) Veröffentlichungstag der Anmeldung: 01.09.1999
(73) Patentinhaber: HEUFT SYSTEMTECHNIK GMBH, 56659 Burgbrohl (DE)
(72) Erfinder: HEUFT, Bernhard, D-56659 Burgbrohl (DE)
(74) Vertreter: Gritschneder, Martin, Dipl.-Phys.
(86) Internationale Anmeldenummer: PCT/EP1997/006300
(87) Internationale Veröffentlichungsnummer: WO 1998/021566

(56) Entgegenhaltungen:
- WO-A-90/04162
- US-A- 4 140 901
- PATENT ABSTRACTS OF JAPAN vol. 15, no. 122 (P-1184), 26.März 1991 & JP 03 010110 A (FUJITSU LTD), 17.Januar 1991,
- PATENT ABSTRACTS OF JAPAN vol. 14, no. 101 (P-1012), 23.Februar 1990 & JP 01 305351 A (HITACHI LTD), 8.Dezember 1989,

## Beschreibung

Die Erfindung betrifft ein Verfahren zum Testen der Zuverlässigkeit eines Prüfgerätes, das eine Vielzahl gleichartiger Leerflaschen auf ein Merkmal hin überprüft, für jeden Gegenstand ein Merkmalsignal erzeugt und das Merkmalsignal mit einem Schwellwert vergleicht. Dem Prüfgerät wird nach einer Anzahl von Leerflaschen eine Testflasche zugeführt, und das Merkmalsignal der Testflasche wird überprüft.

Nach dem Stand der Technik werden Zuverlässigkeitstests für Prüfgeräte für leere Getränkeflaschen, sog. Leerflascheninspektoren, in der Weise durchgeführt, daß eine Reihe von Testflaschen präpariert werden, so daß sie entsprechend der Spezifikation der Fehlererkennung jeweils einen bestimmten Fehler beinhalten, d.h. ein bestimmtes Merkmal nicht erfüllen. Für jedes überprüfte Merkmal wird dabei eine besondere Testflasche präpariert. Der Satz von Testflaschen wird dann in bestimmten Zeitabständen, z.B. jede halbe Stunde, oder nach einer bestimmten Anzahl von Flaschen, z.B. 50.000 Flaschen, in den Flaschenstrom eingereiht. Dies kann von Hand oder automatisch erfolgen. Die Testflaschen sind dabei so markiert, daß sie sofort als Testflaschen erkennbar sind. Der Zuverlässigkeitstest besteht darin, daß überprüft wird, ob diese Testflaschen von dem Leerflascheninspektor als fehlerhaft erkannt werden. Bei dem bisher praktizierten Verfahren ist somit die Überprüfung der Testflasche komplementär zu der Überprüfung der normalen Leerflaschen, d.h. daß das Prüfgerät als zuverlässig arbeitend angesehen wird, wenn das Prüfgerät erkennt, dass die Testflasche fehlerhaft ist. In dem Prüfgerät wird darüber ein Protokoll geführt. Bei Fehlschlagen des Zuverlässigkeitstests, d.h. wenn eine oder mehrere der Testflaschen nicht als fehlerhaft erkannt werden, muß der Test wiederholt werden. Damit soll die Betriebssicherheit, d.h. die Zuverlässigkeit, eines Prüfgerätes hergestellt werden. Dieser Zuverlässigkeitstest ist unbefriedigend, da mit ihm erst nachträglich erkannt wird, daß ein Prüfgerät nicht mehr zuverlässig gearbeitet hat. Die Gründe für das Versagen eines Prüfgerätes sind dabei üblicherweise ein Verschmutzen der Optik oder ein Versagen einzelner Komponenten der Erkennungselektronik. Ein solches Verfahren ist aus US-4 140 901, letzten drei Zeilen des Abstract bekannt.

Bei dem Verfahren nach dem Stand der Technik mußten bei der Prüfung der Zuverlässigkeit eines Leerflascheninspektors eine große Anzahl von Testflaschen verwendet werden, wobei jede Testflasche einen einzigen Fehler, z.B ein defektes Verschlußgewinde oder eine Verunreinigung in einer einzigen Erkennungszone aufwies. Für jede Fehlerart und für jede Erkennungszone war dabei eine eigene besonders präparierte Testflasche erforderlich. Hätte eine Testflasche mehrere Fehler aufgewiesen, so wäre aus dem Umstand, daß diese Testflasche ausgeleitet wird, nicht sichergestellt gewesen, daß alle Fehler erkannt wurden. Ein Testflaschenset besteht daher z.B. aus etwa 10 bis 15 Flaschen.

Aus US 4 691 231, Spalte 12, Zeilen 38 bis 54 ist ein Verfahren zum Testen der Zuverlässigkeit eines Leerflascheninspektors bekannt, bei dem der Zuverlässigkeitstest darin besteht, daß der Prozentsatz der als fehlerhaft erkannten Leerflaschen in einem vorgegebenen Bereich liegt. Anspruch 1 geht von dieser Druckschrift als nächstem Stand der Technik aus.

Der Erfindung, wie sie im Anspruch 1 angegeben ist, liegt die Aufgabe zugrunde, ein Verfahren zu schaffen, mit dem eine Verschlechterung im Betriebsverhalten eines Prüfgerätes möglichst frühzeitig erkannt werden kann.

Gegenstand der Erfindung ist ferner eine Testflasche nach Anspruch 8.

Dem erfindungsgemäßen Verfahren liegt dabei der Gedanke zugrunde, mittels einer Testflasche, deren Merkmalsignal bei korrekter Arbeitsweise des Prüfgerätes sehr genau bekannt ist und das als Referenzwert dem Prüfgerät eingegeben wird, die Zuverlässigkeit des Prüfgerätes zu testen. Abgesehen von unvermeidlichen Ungenauigkeiten bei der Überprüfung der Testflasche muß das Merkmalsignal genau dem Referenzwert entsprechen. Es spielt dabei keine Rolle, ob die Testflasche fehlerfrei ist.

Bei fehlerfreien Flaschen kann das Merkmalsignal innerhalb eines größeren Bereichs liegen oder über oder unter einem Schwellwert liegen.

Leerflascheninspektoren arbeiten bei der Überprüfung auf die Abwesenheit von Fremdkörpern häufig in der Weise, daß z.B. mittels einer CCD-Kamera eine Abbildung der Flaschen punktweise abgetastet wird, und zwar im allgemeinen in zwei zueinander rechtwinkligen Richtungen, und die Helligkeit jedes Bildpunktes ermittelt und durch Vergleich mit der Helligkeit von benachbarten Bildpunkten Hell-Dunkel- und Dunkel-Hell-Übergänge festgestellt werden (US-4 691 231). Ein solcher Übergang tritt z.B. immer dann auf, wenn die Abtastung den Rand eines Fremdkörpers in einer Leerflasche überstreicht. Auch Leerflaschen, die von Fremdkörpern frei sind haben dabei aufgrund von Unebenheiten in der Behälterwand oder der Riffelung am Rand des Bodens eine gewisse Anzahl von Helligkeitsübergängen, z.B. bis zu 100 Helligkeitsübergänge. Ein einzelner Gegenstand gilt in diesem Fall bis zu 100 Helligkeitsübergängen als frei von Fremdkörpern, d.h. ein Merkmalsignal von 100 genügt noch der ersten Bedingung.

Bei einer ordnungsgemäßen Arbeitsweise z.B. eines Leerflascheninspektors wird für die überwiegende Mehrzahl der Leerflaschen, z.B. 90%, ein Merkmalsignal erhalten, das etwas unter der Anzahl von 100 Hell-Dunkel-Übergängen liegt. Sackt die Empfindlichkeit der Erkennungseinrichtung des Prüfgerätes wegen Verschmutzung oder anderer Gründe ab, so führt dies tendenziell zu einem Rückgang der Anzahl der pro Leerflasche erkannten Hell-Dunkel-Übergänge. Ist der Referenzwert einer Testflasche z.B. 95, so fällt das Merkmalsignal der Testflasche bei einem Nachlassen der Empfindlichkeit der Erkennungseinrichtung ab. Je nachdem Je wie groß die Abweichung vom Referenzwert ist, können unterschiedliche Maßnahmen veranlaßt werden. Bei einer Abweichung von 10% kann z.B. lediglich ein Warnsignal ausgegeben werden, während bei einer Abweichung von 20% oder mehr das Prüfgerät und die gesamte Transporteinrichtung stillgesetzt werden.

Eine besonders vorteilhafte Ausgestaltung des erfindungsgemäßen Verfahrens ergibt sich in Verbindung mit Fehlererkennungsmethoden, bei denen nicht nur die Anzahl der Hell-Dunkel-Übergänge gezählt werden, sondern auch noch der Hell-Dunkel-Kontrast der Helligkeitsübergänge festgestellt wird. Die gefundenen, vom Hintergrund abweichenden Bildelemente werden dabei z.B. in acht verschiedenen Helligkeitsklassen eingeteilt oder die Hell-Dunkel-Übergänge werden z.B. in acht verschiedene Kontrastgruppen eingeteilt, wobei erst nach dieser Klassifizierung die Anzahl der Hell-Dunkel-Übergänge gezählt wird und innerhalb jeder Klasse mit einem speziellen Schwellwert verglichen wird. Bei einer Verschmutzung der Erkennungseinrichtung des Prüfgerätes tritt eine Lichtstreuung auf den Linsen oder Glasschutzscheiben auf, was zu einer Verringerung des Hell-Dunkel-Kontrastes führt, da sich durch die Lichtstreuung ein nebelartiger Unschärfeeffekt über das von der Erkennungseinrichtung abgetastete Bild legt. Durch die Verringerung des Hell-Dunkel-Kontrastes ergibt sich eine Verschiebung der Hell-Dunkel-Übergänge innerhalb der Kontrastklassen, und zwar in der Weise, daß die Merkmalsignale häufiger in die Klassen mit geringerem Kontrast fallen. Beim Testen der Zuverlässigkeit des Prüfgerätes braucht man sich jetzt nicht nur auf den Vergleich der Anzahl von Hell-Dunkel-Übergängen zu verlassen, sondern in jeder der Kontrastklassen findet ein Vergleich mit einem Schwellwert statt und zusätzlich kann die Verteilung der Merkmalsignale auf die einzelnen Kontrastklassen berücksichtigt werden.

Angenommen eine Testflasche hat 100 Hell-Dunkel-Übergänge in der Größe von 250 Graustufen und man arbeitet mit zwei Kontrastklassen, wobei die erste Kontrastklasse Hell-Dunkel-Übergänge mit unter 180 Graustufen und die zweite Kontrastklasse Hell-Dunkel-Übergänge mit über 180 Graustufen enthält: Bei einer leichten Verschmutzung der Optik der Erkennungseinrichtung werden dann zwar immer noch 100 Hell-Dunkel-Übergänge festgestellt, allerdings mit verringertem Kontrast, z.B. nur noch 150 Graustufen. Das festgestellte Merkmalsignal lautet dann "100 Hell-Dunkel-Übergäne in der zweiten Kontrastklasse" und entspricht damit nicht dem Referenzwert, der lautet "100 Hell-Dunkel-Übergänge in der Kontrastklasse 1". Die Verschlechterung der Fehlererkennungsmöglichkeit durch die Erkennungseinrichtung macht sich somit durch eine Verschiebung der Hell-Dunkel-Übergänge von der Kontrastklasse 1 in die Kontrastklasse 2 bemerkbar. Durch diese Ausgestaltung des erfindungsgemäßen Verfahrens lassen sich auch Aussagen über die Zuverlässigkeit der Erkennung insbesondere kleiner Fehler oder Fehler in Form transparenter Fremdkörper treffen.

Bei dieser Ausführungsform des erfindungsgemäßen Verfahrens enthält das Merkmalsignal somit nicht nur Angaben über die Anzahl der Hell-Dunkel-Übergänge sondern auch Angaben über die Verteilung der Hell-Dunkel-Übergänge auf die verschiedenen Kontrastklassen. Entsprechende Angaben sind auch in dem Referenzwert enthalten. Dadurch wird eine besonders frühzeitige Erkennung des Nachlassens der Empfindlichkeit der Erkennungseinrichtung möglich. Eine Verschmutzung der Optik der Erkennungseinrichtung führt z.B. zunächst zu keiner Änderung der Anzahl der Hell-Dunkel-Übergänge, sehr wohl jedoch zu einer Änderung in der Verteilung der Hell-Dunkel-Übergänge auf die verschiedenen Kontrastklassen.

Das Einstellen der Referenzwerte für ein Prüfgerät kann von Hand, z.B. über eine Tastatur, erfolgen oder mittels der Testflasche selbst, indem die Testflasche durch das Prüfgerät geschickt wird und das dabei festgestellte Merkmalsignal als Referenzwert gespeichert wird. Mittels weiterer Durchläufe der Testflasche durch das Prüfgerät kann auch die prozentuale Reproduzierbarkeit des Referenzwertes ermittelt werden und dadurch die maximal zulässige Abweichung des Testsignals nach oben oder unten von dem Referenzwert festgelegt werden, bei der das Merkmalsignal der Testflasche noch als dem Referenzwert entsprechend angesehen wird.

Das erfindungsgemäße Verfahren ist insbesondere in der Lebensmittelindustrie von Bedeutung, da es hier besonders wichtig ist, daß Prüfgeräte fehlerfrei arbeiten und daß ein Absinken der Zuverlässigkeit eines Prüfgerätes bereits erkannt wird, bevor fehlerhafte, z.B. noch Laugenreste aufweisende, Leerflaschen unerkannt die Prüfgeräte passieren. Ebenso wichtig ist es, daß sich in Leerflaschen keine Fremdkörper wie Schmutz oder Cellophanfolien befinden, daß der Innendruck nicht zu hoch und nicht zu niedrig ist, daß die Flaschenöffnung keine Absplitterungen aufweist und, bei Konservendosen, daß sie sich vor dem Einfüllen in einem einwandfreien Zustand befinden und daß sie einwandfrei verschlossen sind.

Das bereits beschriebene Erkennungsverfahren, bei dem die Anzahl und gegebenenfalls der Kontrast der Hell-Dunkel-Übergänge ermittelt wird, eignet sich insbesondere zum Erkennen von Fremdkörpern in Leerflaschen und zum Erkennen von Absplitterungen an der Mündungsöffnung. Absorbierende Fremdkörper, z.B. Schmutz werden dabei nach der Hellfeld-Methode festgestellt, während transparente Fremdkörper, z.B. Folien, nach der Dunkelfeld-Methode ermittelt werden (EP-A-0 387 930). Die einzelnen Bereiche einer Leerflasche und insbesondere des Flaschenbodens werden dabei getrennt untersucht. Durch das erfindungsgemäße Verfahren kann die Zuverlässigkeit eines Prüfgerätes mittels einer einzigen Testflasche für jede Fehlerart und jede Erkennungszone getrennt getestet werden, da eine Testflasche für jede Fehlerart und jede Erkennungszone einen bestimmten Referenzwert aufweisen kann. Dadurch läßt sich die Anzahl der Testflaschen stark reduzieren.

Eine Testflasche kann z.B. einen Fehler im Mündungsbereich und einen Fehler in jeder einzelnen Zone der Seitenwanderkennung, z.B. repräsentiert durch einen mittig stehenden Stab in der Flasche, und jeweils einen Fehler im Bodenbereich in den verschiedenen Erkennungszonen, nämlich Randbereich, Übergang, Randmitte und Bodenmitte, aufweisen. Die Fehler im Seitenwand- und Bodenbereich können dabei aus undurchsichtigem Isolierband hergestellt werden und einem definierten Referenzwert entsprechen. Zusätzlich können für die Seitenwand und den Boden noch Fehler in Form von transparenten Fremdkörpern, z.B. aus Zellophan, vorgesehen werden, um die Zuverlässigkeit des Prüfgerätes auch bezüglich transparenter Fremdkörper zu testen.

Zum Testen der Zuverlässigkeit eines Prüfgerätes, das Laugenreste in Leerflaschen aufspürt, wird im allgemeinen jedoch eine separate Testflasche verwendet. Laugen sind polare Flüssigkeiten, so daß sie hochfrequente elektrische Strahlung besser weiterleiten als Luft. Laugenreste können daher durch Ermitteln der Absorbtion hochfrequenter elektromagnetischer Strahlung erkannt werden. Das Merkmalsignal ist hierbei ein Maß für die geringere Absorbtion der elektromagnetischen Strahlung, die sie durch den Laugenrest erfährt. Übersteigt die Intensität der von einer Leerflasche durchgelassenen elektromagnetischen Strahlung einen Schwellwert, so ist die erste Bedingung nicht mehr erfüllt und die betreffende Leerflasche wird als fehlerhaft aus dem weiteren Prüduktionsablauf ausgeschieden. Die Testflasche erhält dabei eine bestimmte Menge der Waschlauge und das entsprechende Merkmalsignal wird als Referenzwert dem Prüfgerät eingegeben. Bei der Prüfung der Zuverlässigkeit des Restlaugen-Prüfgerätes muß das Merkmalsignal für die Testflasche mit geringen Abweichungen dem Referenzwert entsprechen. Zugleich ist die Restlaugenprüfung ein Beispiel dafür, daß das erfindungsgemäße Verfahren auch bei analogen Merkmalsignalen einsetzbar ist.

Ein weiteres Beispiel ist die Ermittlung von Flüssigkeitsresten am Flaschenboden durch Messung der dadruch erfolgenden Dämpfung von IR-Licht. Laugenreste in einer Leerflasche werden dabei sowohl in der vorausgehenden speziellen Überprüfung auf Laugenreste als auch bei der allgemeinen Ermittlung von Flüssigkeitsresten mittels IR-Dämpfung erkannt. Bestimmte Merkmale von Gegenständen können also auch auf zwei verschiedene Weisen geprüft werden.

Das erfindungsgemäße Verfahren ist zum Testen der Zuverlässigkeit von Prüfgeräten anwendbar, die mit unterschiedlichen Ausgangsgrößen als Merkmalsignal arbeiten. Beispiele sind Systeme zum Erkennen heller oder dunkler Pixel oder Systeme zur Auswertung von Helligkeitsverteilungen (Histogramme), die für sich betrachtet oder nach Auswertung über Rechenalgorithmen Kenngrößen für die Güte von Flaschen oder anderen Gegenständen darstellen.

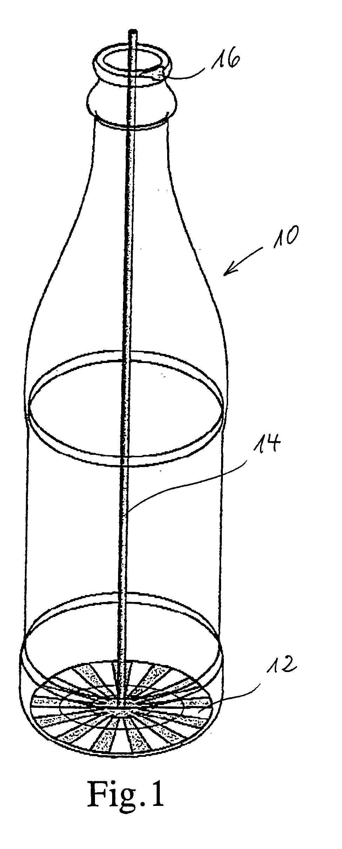

In der beiliegenden Figur ist eine Testflasche dargestellt, die sowohl bei der Seitenwanderkennung als auch bei der Bodenerkennung und der Mündungsprüfung als fehlerhaft erkannt wird, d.h. die entsprechenden ersten Bedingungen nicht erfüllt. Die Flasche 10 ist eine übliche 0,7 1-Wasserflasche aus Glas. Am Boden weist die Testflasche 10 ein strahlenförmiges Muster 12 auf, das bei der Bodenerkennung eine sehr hohe Anzahl von Hell-Dunkel-Übergängen erzeugt. Axial in der Mitte ist ein Stab 14 angeordnet, der unabhängig von der Drehlage der Testflasche 10 immer die gleich Anzahl von Hell-Dunkel-Übergängen erzeugt. Schließlich weist die Testflasche 10 am Öffnungsrand noch eine Absplitterung 16 auf. Durch diese Absplitterung soll die Zuverlässigkeit des Prüfgerätes getestet werden, daß die Mündung der Leerflaschen mittels Bildauswertung kontrolliert. Die Bildauswertung umfaßt dabei eine äußere ringförmige Erkennungszone, die dem nach außen abfallenden Bereich der Mündung entspricht, sowie eine sich daran anschließende innere ringförmig Erkennungszone, die dem horizontalen Bereich der Mündung entspricht. Die Absplitterung 16 führt in der äußeren Erkennungszone zu einer Verringerung der Anzahl der Hell-Dunkel-Übergänge, während sie in der inneren Erkennungszone zu einer Erhöhung der Anzahl der Hell-Dunkel-Übergänge führt.

Eine solche Testflasche wird nach dem erfindungsgemäßen Verfahren zusammen mit dem Strom der Leerflaschen durch das Prüfgerät geleitet. Die Testflasche muß als solche erkennbar sein, damit in dem Prüfgerät die Einhaltung der zweiten Bedingung, also die Übereinstimmung mit dem eingestellten oder eingelesenen Referenzwert, überprüft werden kann. Die Testflasche weist dazu eine Markierung, z.B. einen Metallring oder einen Ring aus Triple-Reflexfolie auf, damit sie von dem Prüfgerät mittels einer entsprechenden Erkennungseinrichtung, z.B. ein Metalldetektor oder einer Lichtschranke, als Testflasche erkannt werden kann. Eine Identifizierung der Testflasche kann jedoch auch durch die Steuereinrichtung des Prüfgerätes softwaremäßig anhand der großen Anzahl der bei dieser Flasche auftretenden Fehler erkannt werden. Es wäre nämlich höchst unwahrscheinlich, daß bei einer normalen Leerflasche eine derartige Häufung von Fehlern auftritt. Werden daher bei einer einzigen Leerflasche das Auftreten aller dieser Fehler in einer für die Testflasche typischen Größenordnung erkannt, so kann daraus geschlossen werden, daß es sich bei dieser Flasche um eine Testflasche handelt und kann die Einhaltung der zweiten Bedingung überprüft werden.

In der gleichzeitig eingereichten Patentanmeldung mit der Bezeichnung "Verfahren zur Bestimmung von Parametern, z.B. Füllstand, Druck oder Gaszusammensetzung, in verschlossenen Behältern" (eigenes Zeichen: 31458/Füllstandsk., enspricht DE 196 46 685.7, welche nach dem vorliegenden Prioritätsdatum veröffentlicht wurde und somit nach Art. 54(2) EPÜ nicht zum Stand der Technik zählt, wird ein Verfahren zur Bestimmung der Füllstandshöhe von Flüssigkeiten in Behältern beschrieben, die durch einen Deckel verschlossen sind, wobei der Deckel durch einen kurzen magnetischen Impuls zu primären mechanischen Schwingungen angeregt wird. Die durch die primären mechanischen Schwingungen des Deckels in dem Behälter angeregten sekundären Schwingungen, die innerhalb des Raums zwischen dem Deckel und der Flüssigkeit stattfinden, werden mittels eines Mikrofons aufgenommen und werden analysiert, wobei aus der festgestellten Frequenz dieser sekundären Schwingungen die Füllstandshöhe ermittelt wird. Aus einer Analyse der primären mechanischen Schwingungen kann dabei zusätzlich der Innendruck des Behälters abgeleitet werden. Auch hierbei läßt sich das erfindungsgemäße Verfahren anwenden. Das Merkmalsignal ist hierbei für die Füllstandshöhe die Frequenz der sekundären Schwingungen. Die erste Bedingung besteht darin, daß dieser Frequenz über einem bestimmten Wert, z.B. 7 kHz liegt; kleinere Frequenzen bedeuten einen zu großen Luftraum im Hals der Flasche und damit eine zu geringe Füllstandshöhe. Die zweite Bedingung, die für die korrekte Arbeitsweise des Prüfgerätes kennzeichnend ist, liegt darin, daß für die Testflasche das Merkmalsignal dem eingestellten Referenzwert entspricht, der zuvor für die Testflasche eingegeben wurde.

Eine weitere Möglichkeit der Überprüfung der Zuverlässigkeit eines Prüfgerätes und insbesondere der Sauberkeit des optischen Erkennungssystems ergibt sich bei der Überprüfung des Wandkontrastes bei der Seitenwanderkennung. Hierbei wird der Kontrastunterschied, d.h. der Helligkeitsunterschied des Flaschenrandes, der wegen der starken Brechung der ihn durchdringenden Lichtstrahlen, schwarz erscheint, im Verhältnis zur Hintergrundbeleuchtung oder zur Helligkeit der Flaschenmitte ermittelt. Abweichungen des Mittelwertes dieses Helligkeitsunterschiedes ermöglichen sehr frühzeitig eine Aussage über eine Verschlechterung der Erkennungsleistung und damit der Zuverlässigkeit des Prüfgerätes.

Mittels der vorausgehend beschriebenen Ausführungsformen des erfindungsgemäßen Verfahrens läßt sich in einem bestimmten Bereich die Empfindlichkeit des Prüfgerätes automatisch nachführen. Bei relativ kleinen Abweichungen des Merkmalsignals von dem Referenzwert, z.B. bei einer Abweichung von 5%, können die Schwellwerte oder Grenzwerte die bei der Prüfung der ersten Bedingung maßgebend sind, um einen entsprechenden Prozentsatz verändert werden. Erst wenn die Abweichung größer als z.B. 5% ist, wird dann ein Warnsignal abgegeben und bei Überschreiten eines weiteren Schwellwertes für die Abweichung, z.B. von 20%, wird das Prüfgerät dann stillgesetzt, weil eine sichere Erkennung bestimmter Fehler nicht mehr gegeben ist. Bei der Feststellung der zulässigen Abweichung wird dabei jedoch jeweils der ursprüngliche eingelesene Referenzwert herangezogen.

## Patentansprüche

1. Verfahren zum Testen der Zuverlässigkeit eines Prüfgerätes, das eine Vielzahl gleichartiger Leerflaschen aus transparentem Material auf Fehlerfreiheit und die Abwesenheit von Fremdkörpern hin überprüft, indem mittels einer Erkennungseinrichtung ein Abbild jeder Leerflasche punktförmig abgetastet wird, für jede Leerflasche ein Merkmalsignal erzeugt wird, das auf der Helligkeitsverteilung basiert, und das Merkmalsignal mit einem Schwellwert verglichen wird, wobei dem Prüfgerät nach einer Anzahl von Leerflaschen eine Testflasche (10) zugeführt wird und das Merkmalsignal der Testflasche (10) überprüft wird, **dadurch gekennzeichnet,**
- **daß** die Testflasche vom Prüfgerät als solche erkennbar ist;
- **daß** ein Referenzwert eingegeben wird, der das Merkmalsignal der Testflasche (10) ist, das man bei korrekter Arbeitsweise des Prüfgerätes erhält, und
- **daß** bei der Überprüfung des Merkmalsignals der Testflasche (10) geprüft wird, ob das Merkmalsignal der Testflasche (10) dem Referenzwert entspricht.

2. Verfahren nach Anspruch 1, **dadurch gekennzeichnet, daß** bei relativ kleinen Abweichungen des Merkmalsignals der Testflasche (10) von dem Referenzwert ein Warnsignal ausgegeben wird und daß bei größeren Abweichungen der Prüfvorgang abgebrochen wird.

3. Verfahren nach Anspruch 1 oder 2, **dadurch gekennzeichnet, daß** eine zulässige Abweichung, bei der das Merkmalsignal der Testflasche (10) noch als dem Referenzwert entsprechend angesehen wird, **dadurch** ermittelt wird, daß anhand mehrerer Durchläufe der Testflasche (10) durch das Prüfgerät die Reproduzierbarkeit des Merkmalsignals ermittelt wird und die zulässige Abweichung dann so festgesetzt wird, daß die bei den mehreren Durchläufen erhaltenen Merkmalsignale innerhalb der zulässigen Abweichung liegen.

4. Verfahren nach einem der Ansprüche 1 bis 3, **dadurch gekennzeichnet, daß** das auf der Helligkeitsverteilung basierende Merkmalssignal Angaben über die Zahl der auftretendenen Hell-Dunkel-Übergänge enthält.

5. Verfahren nach Anspruch 4, wobei Fremdkörper in den Leerflaschen mittels der Erkennungseinrichtung erkannt werden, **dadurch gekennzeichnet, daß** das Merkmalsignal zusätzlich Angaben über die Verteilung der Kontraste der Hell-Dunkel-Übergänge enthält und daß ebenso der Referenzwert Angabe über die Kontrastverteilung der Hell-Dunkel-Übergänge enthält und bei der Überprüfung des Merkmalsignals der Testflasche (10) auch überprüft wird, ob die in dem Merkmalsignal enthaltenen Angaben über die Kontrastverteilung mit denen des Referenzsignals übereinstimmt.

6. Verfahren nach einem der Ansprüche 1 bis 5, **dadurch gekennzeichnet, daß** mit einer einzigen Testflasche (10) die Zuverlässigkeit eines oder mehrerer Prüfgeräte bei der Überprüfung mehrerer Merkmale der Leerflaschen getestet wird.

7. Verfahren nach einem der Ansprüche 1 bis 6, **dadurch gekennzeichnet, daß** die Testflasche (10) einen axial in der Mitte angeordneten Stab (14) oder ein strahlenförmiges Muster (12) am Boden aufweist.

8. Testflasche (10) zur Verwendung in dem Verfahren nach einem der Ansprüche 1 bis 7, **dadurch gekennzeichnet, daß** die Testflasche (10) einen axial in der Mitte angeordneten Stab (14) oder ein strahlenförmiges Muster (12) am Boden aufweist, so daß sie unabhängig von der Drehlage immer die gleiche Anzahl von Hell-Dunkel-Übergängen erzeugt.

## Claims

1. Method for testing the reliability of a checking apparatus which checks a large number of empty bottles of the same type made of transparent material for freedom from defects and the absence of foreign bodies, by scanning an image of each empty bottle pointwise by means of a recognition device, generating a feature signal for each empty bottle that is based on the brightness distribution, and comparing the feature signal with a threshold value, a test bottle (10) being conducted to the checking apparatus after a number of empty bottles and the feature signal of the test bottle (10) being checked, **characterized in that**
- the test bottle is recognizable as such by the checking apparatus;
- a reference value is entered, the reference value being the feature signal of a test bottle (10) which is received when the checking apparatus operates correctly, and
- when the feature signal of the test bottle (10) is checked, it is checked if the feature signal of the test bottle (10) corresponds to the reference value.

2. Method according to claim 1, **characterized in that** a warning signal is given out in the case of relatively small deviations of the feature signal of the test bottle (10) from the reference value and that the checking procedure is interrupted in the case of larger deviations.

3. Method according to claim 1 or 2, **characterized in that** the permitted deviation of the feature signal of the test bottle (10) from the reference value is determined by ascertaining the reproducibility of the feature signal by means of several passes of the test bottle (10) through the checking apparatus, and then setting the permitted deviation so that the feature signals obtained during the several passes lie within the permitted deviation.

4. Method according to one of claims 1 to 3, **characterized in that** the feature signal based on the brightness distribution contains details of the number of light-dark transitions which occur.

5. Method according to claim 4, wherein foreign bodies in the empty bottles are recognized by means of the recognition device, **characterized in that** the feature signal contains in addition details of the distribution of the contrasts of the light-dark transitions and that similarly the reference value contains details of the contrast distribution of the light-dark transitions and when the feature signal of the test bottle (10) is checked, it is also checked if the details of the contrast distribution contained in the feature signal agrees with those of the reference signal.

6. Method according to one of claims 1 to 5, **characterized in that** the reliability of one or more checking apparatuses is tested with a single test bottle (10) when checking several features of the empty bottles.

7. Method according to one of claims 1 to 6, **characterized in that** the test bottle (10) includes an axial rod (14) standing in the center or a radial pattern (12) on the base.

8. Test bottle (10) for use in the method according to one of claims 1 to 7, **characterized in that** the test bottle (10) includes an axial rod (14) standing in the center or a radial pattern (12) on the base so that it always generates the same number of light-dark transitions irrespective of the rotation position.

## Revendications

1. Procédé pour tester la fiabilité d'un appareil de contrôle, qui contrôle une pluralité de bouteilles vides de même type en matériau transparent en vue de détecter l'absence de défauts et la présence de corps étrangers, dans lequel une reproduction de chaque bouteille vide est analysée point par point au moyen d'un dispositif de détection, un signal distinctif, basé sur la répartition de la luminosité, est généré pour chaque bouteille vide et le signal distinctif est comparé à une valeur seuil, une bouteille test (10) étant amenée vers l'appareil de contrôle après un nombre donné de bouteilles vides et le signal distinctif de la bouteille test (10) étant contrôlé,
**caractérisé**
- **en ce que** la bouteille test peut être détectée par l'appareil de contrôle en tant que telle ;
- **en ce qu'**une valeur de référence est introduite, laquelle est le signal distinctif de la bouteille test (10), que l'on obtient lorsque l'appareil de contrôle fonctionne correctement ; et
- **en ce que**, lors du contrôle du signal distinctif de la bouteille test (10), il est vérifié si le signal distinctif de la bouteille test (10) correspond à la valeur de référence.

2. Procédé selon la revendication 1, **caractérisé en ce que**, en présence de divergences relativement faibles entre le signal distinctif de la bouteille test (10) et la valeur de référence, un signal d'avertissement est émis et **en ce que**, en présence de divergences plus grandes, le processus de contrôle est interrompu.

3. Procédé selon la revendication 1 ou 2, **caractérisé en ce qu'**une divergence admissible, pour laquelle le signal distinctif de la bouteille test (10) est encore considéré comme correspondant à la valeur de référence, est déterminée par le fait que, à l'appui de plusieurs passages de la bouteille test (10) à travers l'appareil de contrôle, la reproductibilité du signal distinctif est déterminée et la divergence admissible est alors définie de telle sorte que les signaux distinctifs reçus au cours des passages répétés se situent à l'intérieur de la divergence admissible.

4. Procédé selon l'une quelconque des revendications 1 à 3, **caractérisé en ce que** le signal distinctif basé sur la répartition de la luminosité contient des informations sur le nombre de transitions clair-obscur générées.

5. Procédé selon la revendication 4, dans lequel des corps étrangers sont détectés dans les bouteilles vides au moyen du dispositif de détection, **caractérisé en ce que** le signal distinctif contient en plus des informations sur la répartition des contrastes entre les transitions clair-obscur et **en ce que** la valeur de référence contient également des informations sur la répartition des contrastes entre les transitions clair-obscur et, au cours du contrôle du signal distinctif de la bouteille test (10), il est aussi vérifié si les informations sur la répartition des contrastes, contenues dans le signal distinctif, correspondent à celles du signal de référence.

6. Procédé selon l'une quelconque des revendications 1 à 5, **caractérisé en ce que** la fiabilité d'un ou de plusieurs appareils de contrôle est testée avec une seule bouteille test (10) pendant le processus de contrôle de plusieurs attributs des bouteilles vides.

7. Procédé selon l'une quelconque des revendications 1 à 6, **caractérisé en ce que** la bouteille test (10) comporte une tige (14) agencée axialement au milieu ou un modèle (12) en forme de rayons sur le fond.

8. Bouteille test (10) destinée à être utilisée dans le procédé selon l'une quelconque des revendications 1 à 7, **caractérisée en ce que** la bouteille test (10) comporte une tige (14) agencée axialement au milieu ou un modèle (12) en forme de rayons sur le fond, de telle sorte que, indépendamment de la position de rotation, elle génère toujours le même nombre de transitions clair-obscur.
